# EUROPEAN PATENT SPECIFICATION

(11) **EP 2 813 468 B1**
(45) Date of publication and mention of the grant of the patent: **30.03.2016**
(21) Application number: 13382227.0
(22) Date of filing: 14.06.2013
(51) Int. Cl.: C01B 25/37, C01B 33/20, H01M 4/36, H01M 4/505, H01M 4/58, C01B 25/45

(54) **NEW HIGH CAPACITY MATERIALS BASED ON TRANSITION METALS OF OXINITRIDES**
NEUE HOCHLEISTUNGSMATERIALIEN AUF GRUNDLAGE VON ÜBERGANGSMETALLEN VON OXYNITRIDEN
NOUVEAUX MATÉRIAUX DE CAPACITÉ ÉLEVÉE SUR LA BASE DE MÉTAUX DE TRANSITION D'OXYNITRURES

(43) Date of publication of application: 17.12.2014
(73) Proprietor: CIC Energigune, 01510 Miñano - Álava (ES)
(72) Inventor: Armand, Michel, 01510 Miñano - Álava (ES); Casas-Cabanas, Montserrat, E-01510 Miñano - Álava (ES); Galceran, Montserrat, E-01510 Miñano - Álava (ES); Acebedo, Begoña, E-01510 Miñano - Álava (ES); Recham, Nadir, 80039 Amiens (FR); Kurzman, Josh, 80039 Amiens (FR)
(74) Representative: ABG Patentes, S.L.

(56) References cited:
- WO-A1-2010/046608
- M. ARMAND, M.E. ARROYO Y DE DOMPABLO: "Benefits of N for O substitution in polyoxoanionic electrode materials: a first principles investigation of the electrochemical properties of Li2FeSiO4yNy (y = 0, 0.5, 1)", J. MATER. CHEM., vol. 21, 2011, pages 10026-10034, XP002716474,

## Description

### FIELD OF THE INVENTION

The present invention relates to lithium salts, their method of preparation and their use as electrode material.

### BACKGROUND

The electrode material Li₂FeSiO₄ has been extensively studied as a component of the positive electrode in lithium batteries. However, all the allotropes known cycle within the 2.5 - 4V potential range with the iron shifting from +2 to +3, thus the gravimetric capacity is low. When the voltage cut-off upper limit is brought to 4.5 V, a fraction of the iron present goes to the +4 valence but the cycling is disappointing, both due to the instability of Fe(IV) in strict oxygen coordination with concomitant collapse of the lattice, but also as lithium battery electrolytes are oxidized at such anodic potential. Lattice collapse is also seen when lithium is extracted from Li₂SiO₄.

Recently, Armand and Arroyo y de Dompablo (J. Mater. Chem., 2011,21, 10026-10034) modeled the compounds Li₂FeSiO_{3.5}N_{0.5} and Li₂FeSiO₃Nand found that on these theoretical lattices, the transition of Fe^{III} to Fe^{IV} became in theory possible at a voltage of 4.1 V. However, these compounds are not accessible by synthetic routes as for instance Li₂FeSiO_{3.5}N_{0.5} which is written Li₂Fe^{II}_{0.5}Fe^{III}_{0.5}SiO_{3.5}N_{0.5} or Li₂FeSiO₃N which is written Li₂Fe^{III}SiO₃N thermally decompose when Fe^{III} oxidizes the N³⁻ ion according to:

3Fe³⁺ + N³⁻ → 3Fe²⁺ + ½N₂

Thus, these compounds cannot be made at a temperatures needed to introduce the N³⁻ ion in the lattice, between 300°C and 700°C.

On the other hand, it is well known that the strictly oxides ("polyanionic") electrode material, like LiMPO₄, Li₂MSiO₄, where M represents Fe^{II} or Mn^{II}, a fraction of which can be replaced by isovalent elements like Mg^{II} or Ca^{II}, or aliovalent elements like Al^{III}, Cr^{III}, or V^{III}, are highly insulating materials with a high band gap, and thus require to be coated by a conductive carbon layer to allow for fast enough electrochemical operation for practical application, and the use of very small particles. Though very effective, these procedures result in a lower packing density of the electrode material (as called "tap density" in the battery jargon) reflected in lower practical energy density in the corresponding lithium metal or lithium-ion batteries.

WO 2010/046608 relates to a material made up of optionally-doped fluorosulphate of the type LiFeSO₄F, Li(Fe₁₋ₛ Mns)SO₄F and LiFePO₄F and a method for preparation.

### BRIEF DESCRIPTION OF THE INVENTION

The inventors of the present invention have surprisingly found wide families of electrode materials of formula Li₂SO₄, Li₃PO₄ and Li₄SiO₄ in which a fraction of the oxygen from the polyanionic framework is replaced by nitrogen, giving rise to anionic entities such as SO₃N³⁻, PO₃N⁴⁻, PO₂N₂⁵⁻, SiO₃N⁵⁻, SiO₂N₂⁶⁻. These anions can be used alone, or mixed with classical oxyanions like PO₄³⁻ and SiO₄⁴⁻. When associated with a transition metal M, normally selected from Fe²⁺ or Mn²⁺, a fraction of which can be replaced by isovalent elements like Mg²⁺ or Ca²⁺, or aliovalent elements like Al³⁺, Cr³⁺, or V³⁺, and lithium, redox intercalation materials are obtained. It is part of the invention that when the transition element Mn or Fe are maintained in the +II state, the thermal stability of these materials at temperatures ≥ 300°C allow the synthesis of these materials by thermal solid-state, mechanosynthesis and/or solvothermal routes.

The metastability of these materials, as obtained, allows reversible extraction of lithium corresponding to the transition metals going from +II to +III to +IV. The advantage is thus large reversible capacities for electrochemical use. Yet another superiority of the materials of the invention are a reduced band gap due to extensive overlap of the "d" orbitals of the transition metal and "p" orbitals of nitrogen. The result is a much higher electronic conductivity, and the materials do not need, for electrochemical operation, the coating by a conductive material like carbon.

Therefore, one aspect of the present invention relates to a lithium salt of formula:

Li_{1-q}MP_{y}S_{1-y}O_{3+y}N_{1-y} (I)

Li_{2-q'-y'-z}M_{1+z}PO_{3-y'-z}N_{1+y'+z} (II)

Li_{2-q'+y'-z}M_{2-y'}SiO_{2+y'+z}N_{2-y'-z} (III)

or mixtures thereof,
wherein:
0≤q< 1;0≤q'<2;
0≤y<1;0≤y'≤1;
0≤z≤1;
with the proviso that the result of 2-q'-y'-z; 2-q'+y'-z; 3-y'-z; and 2-y'-z, is greater than zero;
M is selected from the group consisting of Fe, Mn and mixtures thereof, i.e., having formula Fe₁₋ₛMnₛ, wherein 0 ≤s ≤ 1,
and wherein, optionally, a fraction less than 25% of M is replaced by either Mg, Ca, Al, Zn, Ni, Co or mixtures thereof.

In another aspect, the invention refers to a mixture of at least one compound of formula (I), (II) or (III) as defined above or mixtures thereof, with at least a compound of formula:

Li_{1-q}MP_{y}S_{1-y}O₄ (I.2)

Li_{2-q'-y'-z}M_{1+z}PO₄ (II.2)

Li_{2-q'+y'-z}M_{2-y'}SiO₄ (III.2)

wherein:
0≤q< 1;0≤q'<2;
0≤y<1;0≤y'≤1;
0≤z≤1;
with the proviso that the result of 2-q'-y'-z and 2-q'+y'-z, is greater than zero.

Another further aspect of the present invention refers to the use of a compound of formula (I), (II) or (III) as defined above or mixtures thereof, or a mixture of at least one compound of formula (I), (II) or (III) with at least one compound of formula (I.2), (II.2) or (III.2), as electrode material.

Another aspect of this invention refers to a electrochemical generator having at least one positive electrode, at least one negative electrode and an electrolyte, wherein the at least one positive electrode comprises at least a compound of formula (I), (II) or (III) as defined above or mixtures thereof, or a mixture of at least one compound of formula (I), (II) or (III) with at least one compound of formula (I.2), (II.2) or (III.2).

These aspects and preferred embodiments thereof are additionally defined in the claims.

### DETAILED DESCRIPTION OF THE INVENTION

A first aspect of the invention relates to a lithium salt of formulae:

Li_{1-q}MP_{y}S_{1-y}O_{3+y}N_{1-y} (I)

Li_{2-q'}-_{y'-z}M_{1+z}PO_{3-y'-z}N_{1+y'+z} (II)

Li_{2-q'+y'-z}M_{2-y'}SiO_{2+y'+z}N_{2-y'-z} (III)

or mixtures thereof,
wherein:
0≤q< 1;0≤q'<2;
0≤y<1;0≤y'≤;
0≤z≤1;
with the proviso that the result of 2-q'-y'-z; 2-q'+y'-z; 3-y-z; and 2-y'-z, is greater than zero;
M is selected from the group consisting of Fe, Mn and mixtures thereof, i.e., having formula Fe₁₋ₛMnₛ, wherein 0 ≤ s ≤ 1,
and wherein, optionally, a fraction less than 25% of M is replaced by either Mg, Ca, Al, Zn, Ni, Co or mixtures thereof.

The index q or q' is the value of lithium per formula unit which can be removed reversibly from the lithium salt compound either *in situ* in an electrochemical battery operation or chemically.

In one embodiment of the present invention, the value of q or q' is zero (q=0 or q'=0), therefore the compounds of formula (I), (II) and (III) become the compounds of formula (I.1), II.1) or (III.1):

LiMP_{y}S_{1-y}O_{3+y}N_{1-y} (I.1)

Li_{2-y'-z}M_{1+z}PO_{3-y'-z}N_{1+y'+z} (II.1)

Li_{2+y'-z}M_{2-y'}SiO_{2+y'+z}N_{2-y'-z} (III.1)

In another particular embodiment, the value of index q and/or q' is different from zero and is 0 < q < 1; 0 <q' < 2. This means that in compounds of formula (I) and in compounds of formula (II) and (III), q and q', respectively, are the values corresponding to the maximum extractible lithium, limited by the alkali cations initially present in the structure or by the transition elements fully in the +III or +IV oxidation state.

The indexes y, y' and z relate to different indexes of balancing charges.

### Compounds of formula (I)

The value of y in compounds of formula (I) is 0 ≤ y < 1, i.e., this value is always different from 1. In a particular embodiment y=0 and therefore, there is no phosphorus present in the compound of formula (I), i.e. the compound of formula I becomes Li_{1-q}MSO₃N. In such particular embodiment, a preferred compound is represented by the formula:

Li_{1-q}Fe₁₋ₛMnₛSO₃N

wherein
0≤s≤1 and 0≤q<1.

In another particular embodiment, y is 0.1, 0.2, 0.3, 0.4, 0.5, 0.6, 0.7, 0.8 or 0.9. In a preferred embodiment y is 0.7.

In a preferred embodiment, s=0.4. In a further preferred embodiment s=0.4, wherein y=0 and z=0 and 0 ≤q< 1, i.e. Li_{1-q'}Fe_{0.6}Mn_{0.4}SO₃N. In another particular embodiment, s=0.4, wherein y=0, z=0 and q=0, i.e. LiFe_{0.6}Mn_{0.4}SO₃N. In another particular embodiment s=0, i.e. M is Fe, and y is 0.7, i.e. in this particular embodiment the compound of formula I is Li_{1-q}FeP_{0.7}S_{0.3}O_{3.7}N_{0.3}.

In a preferred embodiment, lithium salts of formula (I) have olivine structure, i.e. structure of the olivine group, examples of minerals with related structure are tephorite Mn₂SiO₄, or monticellite CaMgSiO₄.

### Compounds of formula (II) and (III)

The value of y' in compounds of formula (II) and (III) is 0≤y ≤ 1. In a particular embodiment, y'=0.

The value of z is 0 ≤ z ≤ 1. In a preferred embodiment, z=0.

In a particular embodiment, y' and z are both zero.

In another embodiment, y'=0 and z=1.

In another particular embodiment, y'≠0 and z=0.

In another embodiment, y'=1 and z=0.

M is selected from the group consisting of Fe, Mn and mixtures thereof, i.e. M can be represented by Fe₁₋ₛMnₛ, wherein 0 ≤ s ≤ 1.

In a particular embodiment s=0, i.e. M is Fe. In another embodiment s=1, i.e. M is Mn. In another particular embodiment s is 0.1, 0.2, 0.3, 0.4, 0.5, 0.6, 0.7, 0.8 or 0.9. Preferably, s is 0.4.

As commented above, in the compounds of formula (I), (II) and (III) a fraction less than 25% of M can be optionally replaced by at least one element selected from the group consisting of Mg, Ca, Al, Zn, Ni, Co and mixtures thereof. In a preferred embodiment, a fraction less than 25% of M is replaced by at least one element selected from the group consisting of Mg, Al and combinations thereof.

### Process for the preparation of lithium salts of the invention

### A) Process for the preparation of lithium salt of formula (I)

### A.1.) y=0; q=0

The lithium salt of formula (I) wherein y=0 and q=0, i.e. compound of formula LiMSO₃N is a double salt of sulfamic acid (HSO₃NH₂) with Li⁺ ad M⁺⁺ cations.

This compound can be prepared in one step by reacting HSO₃NH₂ or its lithium salt (LiSO₃NH₂) with a compound of formula MX₂ where X = Cl, Br, I, SCN, RSO₃, RCO₂ (R = CH₃, C₆H₅, *p*-CH₃C₆H₄, CF₃, C₂F₅), in the presence of a strong lithium base (LiB).

Strong lithium bases are preferably chosen between, but are not limited to, LiOCH₃, LiOC₂H₅, LiOCH(CH₃)₂, LiOC(CH₃)₃, LiH, LiNH₂, LiN[CH(CH₃)₂)], LiN[Si(CH₃)₃)], LiCH₃, LiC₄H₉, neat. The reaction can also be made in the presence of an organic solvent. Examples of organic solvents include alcohols, amides, ureas, sulfoxides, sulfones, tetraallkyl-sulfonamides, ethers, liquid NH₃ or ethylene-diamine, or an ionic liquid.

The scheme reaction is represented below:

HSO₃NH₂ + 3LiB + 2MX₂ → LiMSO₃N + 3BH + 2LiX

LiSO₃NH₂ + 2LiB + 2MX₂ → LiMSO₃N + 2BH + 2LiX

wherein:
M and X are as described above; and
BH is the protonated form of the strong lithium base.

The compound of formula LiMSO₃N can also be prepared in two steps from HSO₃NH₂ or LiSO₃NH₂ by action of one of the above-referenced strong lithium bases or by a lithium solution in liquid ammonia to yield Li₃SO₃N according to the following reactions:

HSO₃NH₂ + 3LiB →Li₃SO₃N + 3BH

LiSO₃NH₂ + 2LiB → Li₃SO₃N + 2BH

or:

HSO₃NH₂ + 3L1°_{liq ammonia} → Li₃SO₃N + □H₂

LiSO_{3N}H₂ + 2Li°_{liq ammonia} → Li₃SO₃N + H₂

Liquid ammonia can be substituted by methylamine, ethylene-diamine, propylene-1,2-diamine or by the lithium solutions in ethers, like THF or glymes CH₃O(CH₂CH₂O)ₘCH₃ with 1 ≤ m ≤ 4 or their mixture in the presence of benzophenone, naphtalene, anthracene, biphenyl or 4,4'-tert-butyl-diphenyl forming catalytically acting radical anions

In addition, Li₃SO₃N can be conveniently made by action of lithium nitride Li₃N on sulfur trioxide (SO₃) or its complexes with bases SO₃Z, where Z is pyridine, trimethylamine, triethylamine or dimethylformamide.

SO₃ + Li₃N →+ Li₃SO₃N

SO₃Z + Li₃N → Li₃SO₃N + Z

In the second step, the tri-lithium sulfamate (Li₃SO₃N) is reacted with MX₂, according to the following reaction:

Li₃SO₃N + MX₂ → LiMSO₃N

wherein M and X are as defined above.

The reaction can be made neat in the solid-state, by heating under vacuum or inert atmosphere, by ball-milling, or with the help of an organic solvent, an ionic liquid or liquid ammonia.

### A.2.) y≠0; q=0

The lithium salt of formula (I) wherein y≠0 and q=0, i.e. compound of formula LiMP_{y}S_{1-y}O_{3+y}N_{1-y} can be obtained by reacting (1-y)LiMSO₃N with (y)LiMO₄, according to the following reaction:

(1-y)LiMSO₃N + yLiMPO₄ → LiMS_{1-y}PO_{3+y}N_{1-y}

Alternatively, the solid solutions can be made at the stage where HSO₃NH₂ or LiSO₃NH₂ are reacted by substituting H₃PO₄ or LiH₂PO₄ according to the expected stoichiometry and y value and heated at 500°C under vacuum. For instance, following the reaction:

(1-y)LiSO₃NH₂ + yLiH₂MPO₄ + 2 LiB + MX₂ → LiMS_{1-y}PO_{3+y}N_{1-y} + BH + 2LiX

wherein LiB, M, X and BH are as defined above.

### B) Process for the preparation of lithium salt of formula (II)

### B.1.) y'=0; z=0; q'=0

The lithium salt of formula (II) wherein y'=0, z=0 and q=0, i.e. compound of formula Li₂ MPO₃N can be obtained by first reacting an equimolecular amount of Li₃N with lithium metaphosphate LiPO₃ (both commercially available) by heating under vacuum or under inert atmosphere to obtain Li₄PO₃N according to the following reaction:

LiPO₃ + Li₃N → Li₄PO₃N

Li₄PO₃N is further reacted with MX₂ according to the following reaction:

Li₄PO₃N + MX₂ → Li₂MPO₃N + 2LiX

wherein M and X are as defined above.

### B.2.) y'≠0; 0 ≤ z ≤ 1; q'=0

The lithium salt of formula (II) wherein y'≠0; 0 ≤ z ≤ 1 and q'=0, i.e. compound of formula Li_{2-y'-z}M_{1+z}PO_{3-y'-z}N_{1+y'+z}, can be prepared from Li₂MPO₃N (obtained as described above) by reacting it with Li₃MPO₂N₂ and LiM₂PO₂N₂ according to the following reaction:

(1-y-z)Li₂MPO₃N + yLi₃MPO₂N₂ + zLiM₂PO₂N₂ → Li_{2-y-z}M_{1+z}PO_{3-y-z}N_{1+y+z}

Such redox material can be made following the same procedures as presented for lithium salts of formula (I), starting from either monoamido-phosphonic H₂PO₃NH₂ acid, or diamido-phosphonic acid HPO₂(NH₂)₂ or their respective lithium salts LiHPO₃NH₂ and LiPO₂(NH₂)₂ and the strong lithium bases already mentioned, as well as lithium dissolved in liquid ammonia or ethylene-diamine. The M sources can be added during the formation of the lithium salt Li₄PO₃N and Li₅PO₂N₂ or their solid solution and MX₂ concomitantly or sequentially according to the following reactions:

Sequentially:

(1-y-z)H₂PO₃NH₂ + (y+z)HPO₂(NH₂)₂+ (1+y+z)LiB → Li_{4+y+z}PO_{3-y-z}N_{1+y+z} Li_{4+y+z}PO_{3-y-z}N_{1+y+z}+(1+z)MX₂ → Li_{2-y-z}M_{1+z}PO_{3-y-z}N_{1+y+z}

Concomitantly in one step:

(1-y-z)H₂PO₃NH₂ + (y+z)HPO₂(NH₂)₂+ (1+y+z)LiB + (1+z)MX₂ → Li_{4+y+z}PO_{3-y-z}N_{1+y+z}

### C) Process for the preparation of lithium salt of formula (III)

### C.1.) y'=0; z=0; q'=0

The lithium salt of formula (III) wherein y'=0, z=0 and q=0, i.e. compound of formula Li₂ M₂SiO₂N₂ can be obtained by reacting MO, Li₃N and Si₃N₄ according to the following reaction:

2MO + 2/3Li₃N + 1/3Si₃N₄ →2/3Li₂M₂SiO₂N₂

wherein M is as defined above.

### C.2.) y'=1; z=0; q'=0

The lithium salt of formula (III) wherein y'=1, z=0 and q=0, i.e. compound of formula Li₃ MSiO₃N can be obtained by reacting MSiO₃ and Li₃N according to the following reaction:

MSiO₃ + Li₃N → Li₃MSiO₃N

wherein M is as defined above.

Alternatively, it is obtainable from the stable olivines M₂SiO₄:

½M₂SiO₄ + ½SiO₂ + Li₃N → Li₃MSiO₃N

Said compound can also be prepared without resorting to lithium nitride according to the following reaction:

¼Si₃N₄ + ¼Li₂SiO₃ + MO + 5/4Li₂O → Li₃MSiO₃N

### C.3.) y'≠0 or 1; 0 ≤ z ≤1; q'=0

The lithium salt of formula (III) wherein y'≠0 or 1, 0 ≤ z ≤ 1 and q'=0, i.e. compound of formula Li_{2+y'-z}M_{2-y'-z}SiO_{2+y'+z}N_{2-y'-z} can be obtained from solid solutions of mono-nitrido and di-nitrido silicates containing respectively the SiO₃N⁵⁻ and SiO₂N₂⁶⁻ anions according to the following reaction:

(1-y-z)Li₂Fe₂SiO₂N₂ + yLi₃FeSiO₃N + zLiFe₂SiO₃N →Li_{2+y-z}Fe_{2-y}SiO_{2+y+z}N_{2-y-z}

In the case of the Si-based compounds of the invention, and in contrast with the sulfur and phosphorus compounds, the corresponding amido-acids H₃SiO₃NH₂ and H₂SiO₂(NH₂)₂ do not exist as source of Li₅SiO₃N or Li₆SiO₂N₂. The latter salts can be prepared according to the following reactions:

Li₂SiO₃ + Li₃ → Li₅SiO₃N

SiO₂ + 2Li₃N → Li₆SiO₂N₂

or:

⅓Si₃N₄ + 2/3Li₃N + 2Li₂O → Li₆SiO₂N₂

or:

¼SiO₂ + ¼Si₃N₄ + Li₃N + 3/2Li₂O + → Li₆SiO₂N

All the methods described hereinabove provide lithium salts of formula (I), (II) and (III) wherein the q and q' indexes are 0. The compounds of formula (I), (II) and (III) wherein q and q' indexes are different from 0 can be obtained chemically or electrochemically. In a particular embodiment, a molar fraction q or q' of a lithium salt of formula (I), (II) or (III) can be reversely removed from said lithium salt in which q=0, by chemical or electrochemical means. For example, it can be electrochemically obtained *in situ* during the operation of a battery in which the lithium salt is placed in the positive electrode or used as positive electrode material.

### Mixtures

It is also encompassed in the breadth of the invention a mixture comprising at least a lithium salt of formula (I), (II) or (III) as described above and at least a lithium salt selected from:

Li_{1-q}MP_{y}S_{1-y}O₄ (I.2)

Li_{2-q'-y'-z}M_{1+z}PO₄ (II.2)

Li_{2-q'+y-z}M_{2-y'}SiO₄ (III.2)

wherein:
0≤n<1; 0≤q'<2
0≤y<1; 0≤y'≤1
0≤z≤1.
with the proviso that the result of 2-q'-y'-z and 2-q'+y'-z is greater than zero.

In a particular embodiment, the mixture comprises a lithium salt of formula (II) as described above and a lithium salt of formula (II.2). Preferably, the mixture comprises a lithium salt of formula (II) and LiMPO₄.

Even more preferably, the mixture comprises Li₂MPO₃N and LiMPO₄. This mixture can be the result of reacting M₂P₂O₇ with Li₃N as described in the reaction below:

M₂P₂O₇ + Li₃N → LiMPO₄ + Li₂MPO₃N

The mixture of LiMPO₄ + Li₂MPO₃N as electrode materials, where the latter oxinitride has a low band-gap and is electronically conductive, allows to avoid or reduce to a minimum the need of a conductive coating at the surface of the large band-gap material LiMPO₄, ensuring a greater packing density. The specific capacity of the mixture with an average of 1.5 electron exchanged is close to 250 mAh/g.

### Uses

It is also an aspect of the present invention the use of a compound of formula (I), (II) or (III) as described above or mixtures thereof, or a mixture of at least one compound of formula (I), (II) or (III) with at least one compound of formula (1.2), (I.2) or (III.2), as electrode material.

Another aspect of this invention refers to a electrochemical generator having at least one positive electrode, at least one negative electrode and an electrolyte, wherein the at least one positive electrode comprises at least a compound of formula (I), (II) or (III) as defined above or mixtures thereof, or a mixture of at least one compound of formula (I), (II) or (III) with at least one compound of formula (1.2), (II.2) or (III.2).

In a particular embodiment, the positive electrode further comprises a lithium salt selected from LiFePO₄, LiFe₁₋ₛMnₛPO₄ (wherein 0≤s≤0.9), Li₂FeSiO₄ and LiMn₂O₄.

In another particular embodiment, the negative electrode of the electrochemical generator comprises lithium metal, a lithium silicon alloy, a lithium intercalation compound of graphite, a lithium intercalation compound of a hard carbon, a lithium intercalation compound of a soft carbon, Li₄Ti₅O₁₂, a dilithium salt of a conjugated dicarboxylic acid or mixtures thereof.

In another particular embodiment, the electrolyte of the electrochemical generator is a solution of a lithium salt in an organic solvent. The lithium salt of the electrolyte is selected form the group consisting of LiClO₄, LiBF₄, LiPF₆, Li(C₂O₄)₂B, LiBF₃CF₃, LiBF₃C₂F₅, LiPF₃(C₂F₅)₃, LiCF₃SO₃, LiCF₃SO₂NCN, LiCF₃SO₂C(CN)₂, Li[(FSO₂)₂N], Li[(FSO₂)NSO₂CF₃], Li[(CF₃SO₂)₂N], Li[(FSO₂)NSO₂C₄F₉], lithium 4,5-dicyano-1,2,3-triazolate, lithium 4,5-dicyano-2-trifluoromethyl-imidazolate, lithium poly(stryrenesulfonyl-trifluoromethanesulfonimide) and mixtures thereof.

In a preferred embodiment, the lithium salts used in the electrolyte is selected from Li[(FSO₂)₂N], Li[(CF₃SO₂)₂N], lithium 4,5-dicyano-1,2,3-triazole and lithium 4,5-dicyano-2-trifluoromethyl-imidazolate.

In another particular embodiment, the organic solvent used in the electrolyte is selected from ethylene carbonate, propylene carbonate, dimethyl carbonate, diethyl carbonate, ethyl-methyl carbonate, γ-butyrolactone, a tetraalkyl-sulfamide, a cyclic urea, the dimethyl ethers of oligo-ethylene glycols CH₃O(CH₂CH₂O)ₙCH₃ wherein 1 ≤ n ≤ 20, and mixtures thereof.

In another particular embodiment, the electrolyte of the electrochemical generator comprises a linear or branched, cross-linked or not, statistical or alternate, block polymer or copolymer, where at least 30% of the repeat units are the ethylene oxide segment -CH₂CH₂O-.

In a particular embodiment, said polymer or copolymer is used as the organic solvent of the lithium salt solution described above for the electrolyte. In another particular embodiment, the polymer or copolymer is used as a further component of the solution of lithium salt in the organic solvent.

The present invention will now be described by way of examples which serve to illustrate the construction and testing of illustrative embodiments. However, it will be understood that the present invention is in no way limited to the examples set forth below.

### Examples:

### Example 1. Preparation of a lithium salt of formula LiFeSO₃N (Formula (I) when q=0, y=0 and M=Fe)

### Step a)

LiSO₃NH₂ was prepared in water by adding two moles of sulfamic acid to 1 mole of lithium carbonate in water followed by evaporation under reduced pressure and drying the white solid at 100°C under vacuum. 1.0304 g of LiSO₃NH₂ were suspended in 20 ml of anhydrous THF and were treated by 22 ml of a lithium bis(trimethylsilyl)amide 1M solution (Aldrich^{®}, USA) in THF under stirring and the reaction was pursued for four hours. The suspension was centrifuged and washed/centrifuged with 3×30 ml of THF and then dried under vacuum at 120°C to yield phase pure Li₃SO₃N.

### Step b)

In a dry-box under argon (O₂, H₂O < 1ppm), 800 mg of Li₃SO₃N obtained in step a) were suspended in 15 ml of THF and 883 mg of anhydrous ferrous dichloride were added, the vial was tightly capped and the mixture was stirred for 24 hours at 60°C. The suspension turned black with the formation of LiFeSO₃N, and the solid was centrifuged and washed/centrifuged with 2×30 ml of anhydrous THF and then dried under vacuum at 140°C.

### Example 2. Preparation of LiMnSO₃N (Formula (I) when q=0, y=0 and M=Mn)

In a dry-box under argon (O₂, H₂O < 1ppm), 500 mg of Li₃SO₃N obtained according to step a) of example 1 were suspended in 15 ml of anhydrous acetonitrile (ACN) and then 935 mg of manganese (II) bromide were added. The vial was tightly capped and the mixture was stirred for 24 hours at 60°C. The suspension turned black with the formation of LiMnSO₃N, and the solid was centrifuged and washed/centrifuged with 2×20 ml of anhydrous ACN and then dried under vacuum at 140°C.

### Example 3. Preparation of LiFe_{0.6}Mn_{0.4}SO₃N (Formula (I) when q=0, y=0 and M=a mixture of Fe and Mn)

In a dry-box under argon, 3,83 g of lithium nitride Li₃N and 15.32 g of the sulfur trioxide complex with dimethylformamide were added in 125 ml of anhydrous dimethylformamide with 7.605 g of ferrous chloride and 5.034 g of manganese chloride in a glass bottle. The glass vessel was tightly closed and the suspension was heated at 150°C for 2 hours. The greyish-black precipitate was filtered and the LiFe_{0.6}Mn_{0.4}SO₃N thus formed was filtered in the dry-box, washed with THF and dried at 100°C.

### Example 4. Preparation of LiFeP_{0.7}S_{0.3}O_{3.7}N_{0.3} (Formula (I) when q=0, y≠0 and M=Fe)

0,61824 g of LiSO₃NH₂ obtained according to step a) of example 1 and 1,455 g LiH₂PO₄ were added with 15 ml of THF and treated with 10 ml of a 2M solution of lithium diisopropylamide in THF/heptane/ethylbenzene (Aldrich #361798). The white suspension was filtered in the dry-box, rinsed and dried at 120°C. The mixture of Li₃SO₃N and Li₃PO₄ was heated under vacuum at 600°C to form the solid solution Li₃P_{0.7}S_{0.3}O_{3.7}N_{0.3}. 5 g of the solid solution thus obtained were treated as a slurry in DMF with 2,195g of anhydrous FeCl₂ at 150°C. The black slurry powder was centrifuged and washed with 3×20 ml of anhydrous ethyl acetate and dried under vacuum at 125°C. The LiFeP_{0.7}S_{0.3}O_{3.7}N_{0.3} material was electrochemically active in the 3.4-3.9 V vs. Li⁺/Li° with a capacity of 160 mAh/g and did not require carbon coating.

### Example 5. Preparation of Li₃MnSiO₃N (Formula (III) when q'=0; y'=1; z=0 and M=Mn)

5 g of manganous oxide MnO, 4,235 g of nanometric silica (5 nm) calcined beforehand at 800°C and 13,25 g of lithium nitride Li₃N were heated under N₂ in a graphite boat at 800°C for three hours. The resulting Li₃MnSiO₃N had an electrochemical capacity of 320 mAh/g in the voltage range 3-4.5 vs. Li⁺/Li°.

### Example 6. Preparation of a mixture of Li₂MnPO₃N (Formula (II) when q'=0; y'=0 and z=0) and LiMnPO₄.

Mn₂P₂O₇ was prepared by thermal decomposition of NH₄MnPO₄, H₂O under a 10% hydrogen in N₂ at a temperature of 500°C. 2.83 g of this material were weighted and mixed in a dry-box with 348.3 mg of lithium nitride (Li₃N) and the mixture was heated under vacuum at 600°C for 3 hours. The resulting black powder was an equimolecular mixture of LhMnPO₃N and LiMnPO₄.

### Example 7. Preparation of Li₃FeSiO₃N (Formula (III) when q'=0; y'=1; z=0 and M=Fe)

The nitrido-silicate Li₅SiO₃N was prepared by reaction at 800°C of lithium meta-silicate Li₂SiO₃ with an equimolecular amount of lithium nitride Li₃N. 3 g of this material were suspended in N-methyl-2-pyrrolidone (NMP) in an autoclave with 3,05 g of ferrous dichloride, purged under nitrogen and treated at 300°C for three hours. The resulting black powder was filtered, rinsed with 3×20 ml of anhydrous THF and dried under vacuum. Li₃FeSiO₃N had an electrochemical capacity of 300 mAh/g in the voltage range 2.8-4.3 V vs. Li⁺/Li°

## Claims

1. A lithium salt of formula:
Li_{1-q}MP_{y}S_{1-y}O_{3+y}N_{1-y} (I)
Li_{2-q'-y'-z}M_{1+z}PO_{3-y'-z}N_{1+y'+z} (II)
Li_{2-q'+y'-z}M_{2-y'}SiO_{2+y'+z}N_{2-y'-z} (III)
or mixtures thereof,
wherein:
0 ≤ q < 1;0 ≤q' < 2;
0 ≤ y < 1;0 ≤ y' ≤ 1;
0 ≤ z ≤ 1;
with the proviso that the result of 2-q'-y'-z; 2-q'+y'-z; 3-y'-z and 2-y'-z is greater than zero;
M is selected from the group consisting of Fe, Mn and mixtures thereof, i.e. having formula Fe₁₋ₛMnₛ, wherein 0 ≤ s ≤ 1,
and wherein, optionally, a fraction less than 25% of M is replaced by either Mg, Ca, Al, Zn, Ni, Co or mixtures thereof.

2. The lithium salt according to claim 1, wherein q or q' is zero.

3. The lithium salt of formula (I) according to claim 1 or 2, wherein y is zero.

4. The lithium salt of formula (I) according to claim 3, of formula:
Li_{1-q}Fe₁₋ₛMnₛSO₃N
wherein
0 ≤ s ≤ and 0 ≤ q < 1.

5. The lithium salt of formula (I) according to claim 1 or 2, wherein y is different from zero.

6. The lithium salt of formula (II) or (III) according to any of claims 1 and 2, wherein y' and z are zero.

7. The lithium salt of formula (III) according to any of claims 1 and 2, wherein y'=1 and z=0.

8. A mixture of at least a lithium salt as defined in any one of claims 1 to 7 and at least a lithium salt of formula:
Li_{1-q}MP_{y}S_{1-y}O₄ (I.2)
Li_{2-q'-y'-z}M_{1+z}PO₄ (II.2)
Li_{2-q'+y'-z}M_{2-y'}SiO₄ (III.2)
wherein:
0 ≤ q < 1;0 ≤ q' < 2;
0 ≤ y < 1;0 ≤ y' ≤ 1;
0 ≤ z ≤ 1;
with the proviso that the result of 2-q'-y'-z and 2-q'+y'-z, is greater than zero.

9. Use of a lithium salt as defined in any one of claims 1 to 7 or a mixture thereof or a mixture as defined in claim 8, as electrode material.

10. Electrochemical generator having at least one positive electrode, at least one negative electrode and an electrolyte wherein the at least one positive electrode comprises a lithium salt as defined in any of claims 1 to 7 or mixtures thereof or a mixture as defined in claim 8.

11. The electrochemical generator according to claim 10, wherein the negative electrode comprises lithium metal, a lithium-silicon alloy, a lithium intercalation compound of graphite, a lithium intercalation compound of a hard carbon, a lithium intercalation compound of a soft carbon, Li₄Ti₅O₁₂, a di-lithium salt of a conjugated dicarboxylic acid or mixtures thereof.

12. The electrochemical generator according to any one of claims 10 and 11, wherein the electrolyte is a solution of a lithium salt in an organic solvent.

13. The electrochemical generator according to claim 12, wherein the lithium salt is selected from the group consisting of LiClO₄, LiBF₄, LiPF₆, Li(C₂O₄)₂B, LiBF₃CF₃, LiBF₃C₂F₅, LiPF₃(C₂F₅)₃, LiCF₃SO₃, LiCF₃SO₂NCN, LiCF₃SO₂C(CN)₂, Li[(FSO₂)₂N], Li[(FSO₂)NSO₂CF₃], Li[(CF₃SO₂)₂N], Li[(FSO₂)NSO₂C₄F₉], lithium 4,5-dicyano-1,2,3-triazolate, lithium 4,5-dicyano-2-trifluoromethyl-imidazolate, lithium poly(stryrenesulfonyl-trifluoromethane-sulfonimide), a copolymer of lithium stryrenesulfonyl-trifluoromethane-sulfonamide and mixtures thereof.

14. The electrochemical generator according to any one of claims 12 and 13, wherein the electrolyte comprises a linear or branched, cross-linked or not, statistical or alternate, block polymer or copolymer, where at least 30% of the repeat units are the ethylene oxide segment -CH₂CH₂O-.

15. The electrochemical generator according to any of claims 10-14, wherein the at least one positive electrode further comprises LiFePO₄, LiFe₁₋ₛMnₛPO₄ wherein 0 ≤ s ≤ 0.9, Li₂FeSiO₄ or LiMn₂O₄.

## Patentansprüche

1. Lithiumsalz der Formel:
Li_{1-q}MP_{y}S_{1-y}O_{3+y}N_{1-y} (I)
Li_{2-q'-y'-z}M_{1+z}PO_{3-y'-z}N_{1+y'+z} (II)
Li_{2-q'+y'-z}M_{2-y'}SiO_{2+y'+z}N_{2-y'-z} (III)
oder Mischungen davon,
wobei:
0 ≤ q < 1; 0 ≤ q' < 2;
0 ≤ y < 1; 0 ≤ y' ≤ 1;
0 ≤ z ≤ 1;
mit der Maßgabe, dass das Ergebnis von 2-q'-y'-z; 2-q'+y'-z; 3-y'-z und 2-y'-z größer als Null ist;
M ausgewählt ist aus der Gruppe bestehend aus Fe, Mn und Mischungen davon, d.h. die Formel Fe₁₋ₛMnₛ besitzend, wobei 0 ≤ s ≤ 1,
und wobei wahlweise ein Anteil von M von weniger als 25% durch entweder Mg, Ca, Al, Zn, Ni oder Co oder Mischungen davon ersetzt ist.

2. Lithiumsalz gemäß Anspruch 1, wobei q oder q' Null ist.

3. Lithiumsalz der Formel (I) gemäß Anspruch 1 oder 2, wobei y Null ist.

4. Lithiumsalz der Formel (I) gemäß Anspruch 3 mit der Formel:
Li_{1-q}Fe₁₋ₛMnₛSO₃N
wobei
0 ≤ s ≤ 1 und 0 ≤ q < 1 ist.

5. Lithiumsalz der Formel (I) gemäß Anspruch 1 oder 2, wobei y von Null verschieden ist.

6. Lithiumsalz der Formel (II) oder (III) gemäß einem der Ansprüche 1 oder 2, wobei y' und z Null sind.

7. Lithiumsalz der Formel (III) gemäß einem der Ansprüche 1 oder 2, wobei y'=1 und z=0 sind.

8. Mischung von mindestens einem Lithiumsalz wie in einem der Ansprüche 1 bis 7 definiert und mindestens einem Lithiumsalz der Formel:
Li_{1-q}MP_{y}S_{1-y}O₄ (I.2)
Li_{2-q'-y'-z}M_{1+z}PO₄ (II.2)
Li_{2-q'+y'-z}M_{2-y'}SiO₄ (III.2)
wobei:
0 ≤ q < 1; 0 ≤ q' < 2;
0 ≤ y < 1; 0 ≤ y' ≥ 1;
0 ≤ z ≤ 1;
mit der Maßgabe, dass das Ergebnis von 2-q'-y'-z und 2-q'+y'-z größer als Null ist.

9. Verwendung eines wie in einem der Ansprüche 1 bis 7 definierten Lithiumsalzes oder einer Mischung davon oder einer wie in Anspruch 8 definierten Mischung als Elektrodenmaterial.

10. Elektrochemischer Generator, welcher mindestens eine positive Elektrode, mindestens eine negative Elektrode und einen Elektrolyt aufweist, wobei die mindestens eine positive Elektrode ein wie in einem der Ansprüche 1 bis 7 definiertes Lithiumsalz oder Mischungen davon oder eine wie in Anspruch 8 definierte Mischung umfasst.

11. Elektrochemischer Generator gemäß Anspruch 10, wobei die negative Elektrode Lithium-Metall, eine Lithium-Silizium-Legierung, eine Lithiumeinlagerungs-verbindung von Graphit, eine Lithiumeinlagerungs-verbindung von einem harten Kohlenstoff, einer Lithiumeinlagerungsverbindung eines weichen Kohlenstoffs, Li₄Ti₅O₁₂, ein Dilithiumsalz einer konjugierten Dicarboxylsäure oder Mischungen davon umfasst.

12. Elektrochemischer Generator gemäß einem der Ansprüche 10 und 11, wobei der Elektrolyt eine Lösung eines Lithiumsalzes in einem organischen Lösungsmittel ist.

13. Elektrochemischer Generator gemäß Anspruch 12, wobei das Lithiumsalz aus der Gruppe bestehend aus LiClO₄, LiBF₄, LiPF₆, Li(C₂O₄)₂B, LiBF₃CF₃, LiBF₃C₂F₅, LiPF₃(C₂F₅)₃, LiCF₃SO₃, LiCF₃SO₂NCN, LiCF₃SO₂C(CN)₂, Li[(FSO₂)₂N], Li[(FSO₂)NSO₂CF₃], Li[(CF₃SO₂)₂N], Li[(FSO₂)NSO₂C₄F₉], Lithium 4,5-dicyano-1,2,3-triazolat, Lithium 4,5-dicyano-2-trifluormethyl-imidazolat, Lithiumpoly (stryrolsulfonyl-trifluormethanesulfonimid), einem Copolymer von Lithiumstryrolsulfonyl-trifluormethansulfonamid und Mischungen davon ausgewählt ist.

14. Elektrochemischer Generator gemäß einem der Ansprüche 12 und 13, wobei der Elektrolyt ein lineares oder verzweigtes, vernetztes oder nicht vernetztes, statistisches oder alternierendes Blockpolymer oder Copolymer umfasst, wobei mindestens 30% der Wiederholungseinheiten das Ethylenoxidsegment -CH₂CH₂O- ist.

15. Elektrochemischer Generator gemäß einem der Ansprüche 10 bis 14, wobei die mindestens eine positive Elektrode weiterhin LiFePO₄, LiFe₁₋ₛMnₛPO₄, wobei 0 ≤ s ≤ 0.9 ist, Li₂FeSiO₄ oder LiMn₂O₄ umfasst.

## Revendications

1. Sel de lithium de formule :
Li_{1-q}MP_{y}S_{1-y}O_{3+y}N_{1-y} (I)
Li_{2-q'-y'-z}M_{1+z}PO_{3-y'-z}N_{1+y'+z} (II)
Li_{2-q'+y'-z}M_{2-y'}SiO_{2+y'+z}N_{2-y'-z} (III)
ou mélanges de ceux-ci,
où :
0 ≤ q < 1;0 ≤ q' < 2;
0 ≤ y <1;0 ≤ y' ≤ 1;
0 ≤ z ≤ 1;
à condition que le résultat de 2-q'-y'-z ; 2-q'+y'-z ; 3-y'-z et 2-y'-z est supérieur à zéro ;
M est choisi dans le groupe constitué de Fe, Mn et de mélanges de ceux-ci, c'est-à-dire présentant la formule Fe₁₋ₛMnₛ, où 0 ≤ s ≤ 1,
et dans lequel, éventuellement, une fraction inférieure à 25 % de M est remplacée par soit Mg, Ca, Al, Zn, Ni, Co soit des mélanges de ceux-ci.

2. Sel de lithium selon la revendication 1, dans lequel q ou q' est égal à zéro.

3. Sel de lithium de la formule (I) selon la revendication 1 ou 2, dans lequel y est égal à zéro.

4. Sel de lithium de la formule (I) selon la revendication 3, de formule:
Li_{1-q}Fe₁₋ₛMnₛSO₃N
où
0 ≤ s≤ 1 et 0 ≤ q < 1.

5. Sel de lithium de formule (I) selon la revendication 1 ou 2, dans lequel y est différent de zéro.

6. Sel de lithium de formule (II) ou (III) selon l'une quelconque des revendications 1 et 2, dans lequel y' et z sont égaux à zéro.

7. Sel de lithium de formule (III) selon l'une quelconque des revendications 1 et 2, dans lequel y'=1 et z=0.

8. Mélange d'au moins un sel de lithium tel que défini selon l'une quelconque des revendications 1 à 7 et d'au moins un sel de lithium de formule:
Li_{1-q}MPyS_{1-y}O₄ (I.2)
Li_{2-q'-y'-z}M_{1+z}PO₄ (II.2)
Li_{2-q'+y'-z}M_{2-y'}SiO₄ (III.2)
où :
0 ≤ q < 1;0 ≤ q'< 2;
0 ≤ y < 1;0 ≤ y' ≤ 1;
0 ≤ z ≤ 1;
à condition que le résultat de 2-q'-y'-z et 2-q'+y'-z, est supérieur à zéro.

9. Utilisation d'un sel de lithium tel que défini selon l'une quelconque des revendications 1 à 7 ou d'un mélange de ceux-ci ou d'un mélange tel que défini selon la revendication 8, comme matériau d'électrode.

10. Générateur électrochimique présentant au moins une électrode positive, au moins une électrode négative et un électrolyte dans lequel la au moins une électrode positive comprend un sel de lithium tel que défini selon l'une quelconque des revendications 1 à 7 ou des mélanges de ceux-ci ou un mélange tel que défini dans la revendication 8.

11. Générateur électrochimique selon la revendication 10, dans lequel l'électrode négative comprend un métal de lithium, un alliage de lithium-silicium, un composé à insertion lithium de graphite, un composé à insertion lithium d'un carbone dur, un composé à insertion lithium d'un carbone mou, Li₄Ti₅O₁₂, un sel de di-lithium d'un acide dicarboxylique conjugué ou des mélanges de ceux-ci.

12. Générateur électrochimique selon l'une quelconque des revendications 10 et 11, dans lequel l'électrolyte est une solution d'un sel de lithium dans un solvant organique.

13. Générateur électrochimique selon la revendication 12, dans lequel le sel de lithium est choisi dans le groupe constitué de LiClO₄, LiBF₄, LiPF₆, Li(C₂O₄)₂B, LiBF₃CF₃, UBF₃C₂F₅, LiPF₃(C₂F₅)₃, LiCF₃SO₃, LiCF₃SO₂NCN, LiCF₃SO₂C(CN)₂, Li[(FSO₂)₂ Li[(FSO₂)NSO₂CF₃], Li[(CF₃SO₂)₂N], Lil(FSO₂)NSO₂C₄F₉], 4,5-dicyano-1,2,3-triazolate de lithium, 4,5-dicyano-2-trifluorométhyl-imidazolate de lithium, poly(styrènesulfonyle-trifluorométhane-sulfonimide) de lithium, un copolymère de styrènesulfonyle-trifluorométhane-sulfonamide de lithium et des mélanges de ceux-ci.

14. Générateur électrochimique selon l'une quelconque des revendications 12 et 13, dans lequel l'électrolyte comprend un copolymère ou polymère séquencé, statistique ou alterné, réticulé ou non, linéaire ou ramifié, dans lequel au moins 30 % des unités répétitives sont le segment oxyde d'éthylène -CH₂CH₂O-.

15. Générateur électrochimique selon l'une quelconque des revendications 10-14, dans lequel la au moins une électrode positive comprend de plus LiFePO₄, LiFe₁₋ₛMnₛPO₄ où 0 ≤ s ≤ 0,9, Li₂FeSiO₄ ou LiMn₂O₄.
